# DEMANDE DE BREVET EUROPEEN

(11) **EP 4 181 334 A1**
(43) Date de publication de la demande: **17.05.2023**
(21) Numéro de dépôt: 22206310.9
(22) Date de dépôt: 09.11.2022
(51) Int. Cl.: H02B 1/30

(54) **ARMOIRE ÉLECTRIQUE, NOTAMMENT POUR UN VÉHICULE FERROVIAIRE**

(30) Priorité: 10.11.2021 FR 2111948
(71) Demandeur: SpeedInnov, 75008 Paris (FR)
(72) Inventeur: FUHRMANN, Renaud, 90800 Bavilliers (FR)
(74) Mandataire: Lavoix

(57) **Abrégé**

L'armoire électrique (10) comprend des prises électriques (16) et des câbles électriques (18) connecté aux prises électriques (16) via des connecteurs électriques (20). Un boitier (23) délimite un logement pour les connecteurs électriques (20) et comporte une ouverture (26) d'accès aux prises électriques (16). Un couvercle (24) en deux parties referme ladite ouverture d'accès (26). Le couvercle (24) comporte une partie supérieure comportant un bord inférieur (28a) comprenant des premières découpes (30a) de passage de câble, et une partie inférieure (28b) comportant un bord supérieur (28b) coopérant avec ledit bord inférieur (28a), le bord supérieur (28b) comprenant, pour chaque première découpe (30a), une seconde découpe (30b) de passage de câble, formant un orifice de passage avec la première découpe (30a) correspondante.

## Description

La présente invention concerne une armoire électrique, notamment pour un véhicule ferroviaire.

On connait déjà, dans l'état de la technique, une armoire électrique, notamment pour un véhicule ferroviaire, comprenant au moins une prise électrique et au moins un câble électrique connecté à la prise électrique via un connecteur électrique. Une telle armoire électrique est généralement destinée à équiper un compartiment machine du véhicule ferroviaire.

Dans un tel état de la technique connu, les connecteurs électriques sont généralement étanches, afin d'éviter une pénétration indésirable de poussière dans les prises électriques.

Il est toutefois à noter que de tels connecteurs électriques étanches sont généralement onéreux.

D'autres exemples d'armoires électriques sont décrits dans WO 2019/048163, EP 3 714 665 ou WO 02/087036.

L'invention a notamment pour but de proposer une armoire électrique plus économique, tout en conservant une bonne étanchéité contre la poussière.

On notera que, dans la présente description, la notion d'étanchéité s'entend comme une étanchéité aux poussières, c'est-à-dire empêchant la pénétration de poussières dans la prise électrique.

A cet effet, l'invention a notamment pour objet une armoire électrique, notamment pour un véhicule ferroviaire, comprenant au moins une prise électrique et au moins un câble électrique connecté à la prise électrique via un connecteur électrique, caractérisée en ce que l'armoire électrique comporte :
- un boitier, délimitant un logement pour l'au moins un connecteur électrique lorsqu'il est connecté à la prise électrique correspondante, et comportant une ouverture d'accès à la au moins une prise électrique,
- un couvercle en deux parties, refermant ladite ouverture d'accès lorsque le couvercle est rapporté sur le boitier, le couvercle comportant une partie supérieure et une partie inférieure, telles que la partie supérieure comporte un bord inférieur comprenant au moins une première découpe de passage de câble, et la partie inférieure comporte un bord supérieur destiné à coopérer avec ledit bord inférieur, le bord supérieur comprenant, pour chaque première découpe, une seconde découpe de passage de câble, formant un orifice de passage avec la première découpe correspondante.

Conformément à l'invention, l'étanchéité n'est plus assurée au niveau de chaque connecteur, mais au niveau de l'ensemble des connecteurs, une fois les câbles connectés aux prises.

Il est ainsi possible d'utiliser des connecteurs non étanches, par exemple des connecteurs à poignées dans un mode de réalisation préféré.

On notera que le couvercle en deux parties permet d'être refermé sur les câbles, en faisant passer chaque câble à travers une ouverture respective, alors que les câbles sont déjà connectés aux prises.

Une armoire électrique selon l'invention peut comporter en outre l'une ou plusieurs des caractéristiques suivantes, prises seules ou selon toutes combinaisons techniquement envisageables.
- Les bords supérieur et inférieur coopèrent par contact.
- Les bords supérieur et inférieur coopèrent par recouvrement de l'un par-dessus l'autre.
- Chaque connecteur électrique comporte une poignée de préhension.
- Chaque câble électrique présente un premier diamètre, et l'orifice de passage présente un second diamètre sensiblement égal au premier diamètre.
- Chacune des premières et secondes découpes porte un revêtement de protection.
- Chaque revêtement de protection est réalisé en caoutchouc.

L'invention concerne également un véhicule ferroviaire, caractérisé en ce qu'il comporte au moins une armoire électrique telle que définie précédemment.

Différents aspects et avantages de l'invention seront mis en lumière dans la description qui va suivre, donnée uniquement à titre d'exemple non limitatif et faite en se référant aux figures annexées, parmi lesquelles :

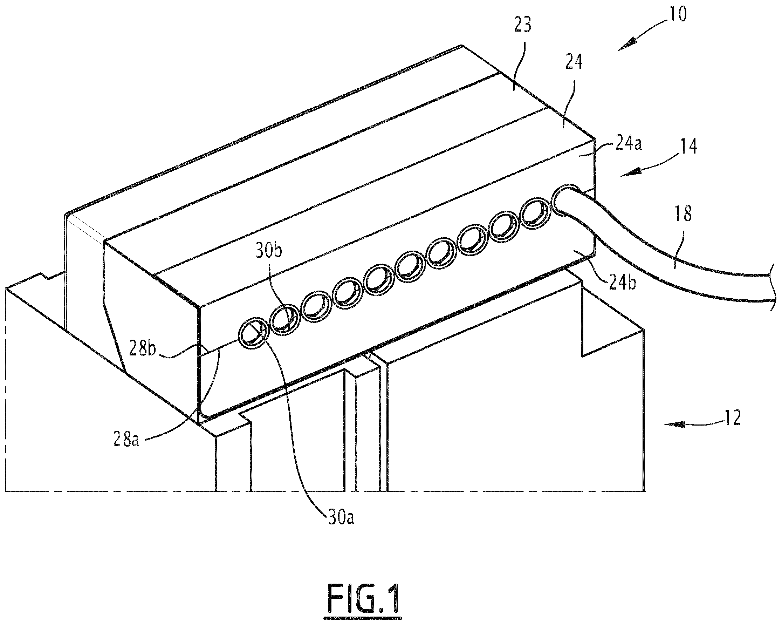

[Fig 1] La figure 1 est une vue en perspective d'une armoire électrique selon un exemple de mode de réalisation de l'invention,
[Fig 2] La figure 2 est une vue en perspective de l'armoire électrique de la figure 1, dont le couvercle a été retiré.

On a représenté, sur les figures, une armoire électrique 10, par exemple destinée à équiper un compartiment machine de véhicule ferroviaire. L'armoire électrique est de préférence de type basse tension.

Le fonctionnement général de l'armoire électrique 10 est classique, et ne sera donc pas décrit en détail. En effet, l'invention porte sur l'étanchéité de connecteurs électriques de l'armoire électrique 10, et non pas sur son fonctionnement général, qui reste inchangé.

On distinguera ainsi, sur les figures, une partie fonctionnelle 12, comprenant tous les composants électroniques permettant le fonctionnement de l'armoire électrique, et une partie de connexion 14, comportant au moins une prise électrique 16, par exemple une quinzaine de prises électriques.

Chaque prise électrique 16 est destinée à être connectée à un câble électrique 18, par l'intermédiaire d'un connecteur électrique 20 complémentaire de la prise électrique. Chaque connecteur électrique 20 est de préférence relié à une extrémité de l'un respectif des câbles électriques 18.

Dans l'exemple décrit, les connecteurs électriques 20 comportent chacun une poignée de préhension 22. Une telle poignée de préhension 22 permet de manipuler aisément le connecteur électrique 20 correspondant pour sa connexion avec une prise électrique ou sa déconnexion. En outre, la poignée de préhension 22 peut être fixée au câble électrique 18.

On notera qu'un tel connecteur électrique 20 est économique, mais qu'il ne présente généralement pas une bonne étanchéité.

L'invention permet de remédier à cet inconvénient, en assurant l'étanchéité globale de la partie de connexion 14 plutôt que l'étanchéité individuelle des connecteurs électriques.

A cet effet, l'armoire électrique 10 comporte un boitier 23 et un couvercle 24 refermant le boitier de manière étanche. On rappellera ici qu'il s'agit d'une étanchéité aux poussières dont il est question dans la présente description.

L'étanchéité peut par exemple être assurée par un recouvrement du couvercle 24 sur le boitier 23, par un contact plan, ou, en variante, par l'intermédiaire d'un joint d'étanchéité.

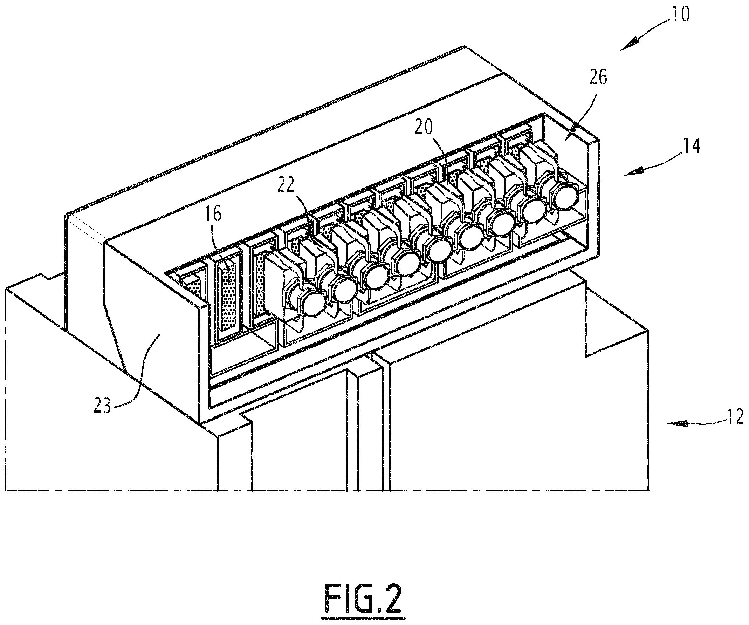

Le boitier 23 délimite un logement pour l'ensemble des connecteurs électriques 20, lorsqu'ils sont connectés aux prises électriques 16, comme cela est représenté sur la figure 2. Le boitier 23 comporte une ouverture 26 d'accès aux prises électriques 16, permettant un accès total aux prises électriques 16 pour la connexion ou la déconnexion des connecteurs électriques 20.

Le couvercle 24 est destiné à recouvrir l'ouverture d'accès 26, de sorte que l'accès aux prises électriques 16 n'est possible que lorsque le couvercle 24 est retiré.

Ainsi, les câbles 18 sont raccordés aux prises électrique 16 lorsque le couvercle 24 est ôté. Afin de permettre la fermeture du couvercle 24 malgré les câbles, le couvercle 24 est réalisé en deux parties, que nous appellerons ici partie supérieure 24a et partie inférieure 24b.

Les parties supérieure 24a et inférieure 24b sont par exemple formées par des tôles métalliques.

La partie supérieure 24a comporte un bord inférieur 28a et la partie supérieure 24b comporte un bord supérieur 28b. Les bords inférieur 28a et supérieur 28b coopèrent ensemble de manière étanche aux poussières, par exemple par contact étroit, ou par recouvrement de l'un sur l'autre, avec ou sans joint d'étanchéité.

Le bord inférieur 28a comporte au moins une première découpe 30a de passage de câble, et le bord inférieur 28b comporte, pour chaque première découpe 30a, une seconde découpe 30b de passage de câble, tels que chaque première découpe 30a forme un orifice de passage de câble avec la seconde découpe 30b correspondante.

Ainsi, lorsque les parties supérieure 24a et inférieure 24b sont assemblées, chaque première découpe 30a et la seconde découpe 30b correspondante sont refermées sur l'un respectif des câbles 18, pour former l'orifice de passage au travers duquel passe ce câble 18.

Avantageusement, chacune des premières 30a et secondes 30b découpes comporte un revêtement de protection, par exemple en caoutchouc, inséré sur le bord de la découpe. Le revêtement de protection est ainsi intercalé entre ce bord et le câble, pour que le bord, qui peut être tranchant, n'abime pas le câble. Dans le cas ci-dessus, chacune des premières 30a et secondes 30b découpes comporte un revêtement de protection formant un demi-anneau.

De préférence, chaque câble électrique 18 présente un premier diamètre, et l'orifice de passage présente un second diamètre sensiblement égal au premier diamètre. On notera que ledit diamètre de l'orifice de passage est le diamètre intérieur du revêtement de protection lorsqu'un tel revêtement de protection est présent. Les premier et second diamètres coïncident pour ne pas autoriser le passage de poussière à travers l'orifice de passage.

On notera que l'invention permet d'assurer la fonction d'étanchéité à la poussière de manière simple, efficace et économique. En particulier, les parties de couvercle sont réalisées en tôle, et conformées par découpe laser et pliage, le coût de ces opérations étant faible.

## Revendications

1. Armoire électrique (10), notamment pour un véhicule ferroviaire, comprenant au moins une prise électrique (16) et au moins un câble électrique (18) connecté à la prise électrique (16) via un connecteur électrique (20), **caractérisée en ce que** l'armoire électrique (10) comporte :
- un boitier (23), délimitant un logement pour l'au moins un connecteur électrique (20) lorsqu'il est connecté à la prise électrique correspondante, et comportant une ouverture (26) d'accès à la au moins une prise électrique (16),
- un couvercle (24) en deux parties, refermant ladite ouverture d'accès (26) lorsque le couvercle (24) est rapporté sur le boitier (23), le couvercle (24) comportant une partie supérieure (24a) et une partie inférieure (24b), telles que la partie supérieure (24a) comporte un bord inférieur (28a) comprenant au moins une première découpe (30a) de passage de câble, et la partie inférieure (28b) comporte un bord supérieur (28b) destiné à coopérer avec ledit bord inférieur (28a), le bord supérieur (28b) comprenant, pour chaque première découpe (30a), une seconde découpe (30b) de passage de câble, formant un orifice de passage avec la première découpe (30a) correspondante.

2. Armoire électrique (10) selon la revendication 1, dans lequel les bords supérieur (28b) et inférieur (28a) coopèrent par contact.

3. Armoire électrique (10) selon la revendication 1, dans lequel les bords supérieur (28b) et inférieur (28a) coopèrent par recouvrement de l'un par-dessus l'autre.

4. Armoire électrique (10) selon l'une quelconque des revendications précédentes, dans lequel chaque connecteur électrique (20) comporte une poignée de préhension (22).

5. Armoire électrique (10) selon la revendication 1 ou 2, dans lequel chaque câble électrique (18) présente un premier diamètre, et l'orifice de passage (30a,30b) présente un second diamètre sensiblement égal au premier diamètre.

6. Armoire électrique (10) selon l'une quelconque des revendications précédentes, dans laquelle chacune des premières (30a) et secondes (30b) découpes porte un revêtement de protection.

7. Armoire électrique selon la revendication 6, dans laquelle chaque revêtement de protection est réalisé en caoutchouc.

8. Véhicule ferroviaire, **caractérisé en ce qu'**il comporte au moins une armoire électrique selon l'une quelconque des revendications précédentes.
